# NEUE EUROPÄISCHE PATENTSCHRIFT

(11) **EP 2 934 802 B2**
(45) Veröffentlichungstag und Bekanntmachung des Hinweises auf die Entscheidung über den Einspruch: **11.12.2019**
(45) Hinweis auf die Patenterteilung: 13.07.2016
(21) Anmeldenummer: 13802587.9
(22) Anmeldetag: 05.12.2013
(51) Int. Cl.: B23B 51/02

(54) **SPIRALBOHRER**
TWIST DRILL
FORET HÉLICOÏDAL

(30) Priorität: 20.12.2012 DE 102012112781
(43) Veröffentlichungstag der Anmeldung: 28.10.2015
(73) Patentinhaber: Walter AG, 72072 Tübingen (DE)
(72) Erfinder: ROGALLA, Siegfried, 77723 Gengenbach (DE); THOMA, Stefan, 79183 Waldkirch (DE)
(74) Vertreter: WSL Patentanwälte Partnerschaft mbB
(86) Internationale Anmeldenummer: PCT/EP2013/075676
(87) Internationale Veröffentlichungsnummer: WO 2014/095395

(56) Entgegenhaltungen:
- EP-A1- 0 891 239
- EP-A1- 2 202 018
- WO-A1-98/35777
- DE-A1- 19 807 429
- DE-A1-102008 022 945
- DE-A1-102011 086 422
- FR-A- 725 505
- FR-A- 1 274 316
- GB-A- 190 625 179
- JP-A- H0 550 313
- JP-A- H0 557 517
- JP-A- 2007 075 942
- SU-A1- 1 103 959
- US-A- 3 667 857
- US-A- 4 932 815
- US-A- 5 074 728
- US-A- 5 176 476
- US-A- 5 503 237
- US-A- 5 882 152
- US-A1- 2009 277 691
- US-A1- 2013 121 778
- US-B2- 7 306 411

## Beschreibung

Die vorliegende Erfindung betrifft einen Spiralbohrer mit einem Schaft und einem Spannutenabschnitt, der sich zwischen einer Bohrerspitze und dem Schaft erstreckt und der mindestens zwei unter einem Drallwinkel (α) schraubenförmig umlaufende Spannuten aufweist, die durch zwei Stege voneinander getrennt sind, und der auf den die Stege radial begrenzenden Schneidrücken jeweils mindestens zwei Rundfasen aufweist.

Derartige Spiralbohrer sind beispielsweise aus der US 7,306,411 B2 und der EP 0 891 239 bekannt.

Die FR 1 274316 zeigt einen Spiralbohrer mit den Merkmalen des Oberbegriffs von Anspruch 1.

Es zeigt Stukturen, die als Rundfasen dienen könnten, deren Winkel relativ zur Achse jedoch, ebenfalls von der Achse aus in derselben Richtung gemessen wie die Ränder der Spiralnuten, gemäß Beschreibung und Zeichnung größer als 90° sein soll.

Die Entgegenhaltung WO 98/35777 zeigt einen Spiralbohrer, an dessen vorderem Ende die Bohrerstege mit Gewindegängen versehen sind. Derartige Gewindegänge schneiden eine Gewinde in die Wände des Bohrlochs ein und haben die Aufgabe, dem Bohrer eine axiale Vorschubbewegung mitzugeben. Sie sind also keine Rundfasen, die den Bohrer in der durch dir Bohrerspitze erzeugten Bohrloch führen.

Die US 5,074,728 beschreibt eine Schraube, die eine Bohrerspitze aufweist, d.h. eine Schraube, die ihre eigene Gewindebohrung herstellt. Ganz offensichtlich muss auch bei dieser Schraube das Gewinde in die Bohrwand einschneiden und dient nicht der Führung eines Bohrers bzw. der Schraube im Sinne von Rundfasen.

Die GB 25 179 beschreibt einen kombinierten Bohrer und Räumer, bei dem die Bohrerstege eine gezahnte Struktur aufweisen, die man auch als Unterbrechungen des Steges ansehen kann, wobei jedoch auch hier die Neigung der so gebildeten Flächen relativ zur Bohrerachse größer als 90° ist. Die Vorderkanten dieser Strukturen sind als Schneidzähne ausgebildet und sollen offenbar ein entsprechendes Bohrloch weiter ausräumen Diese Strukturen sind somit ebenfalls keine Rundfasen.

Insbesondere beim Bohren von Bohrlöchern, deren Länge ein Vielfaches, z.B. mindestens das Fünffache, größer ist als der Bohrlochdurchmesser, tritt an Bohrern, welche auf ihrem Schneidrücken keine Rundfasen haben, entweder eine hohe Reibung auf, nämlich dann, wenn der durch den Schneidrücken definierte Bohrdurchmesser dem Nenndürchmesser entspricht oder nur geringfügig kleiner ist, oder aber der Bohrer neigt dazu, im Bohrloch zu schwingen oder zu vibrieren, wenn die Schneidrücken (ohne Rundfasen) einen Durchmesser definieren, der deutlich kleiner als der Nenndurchmesser ist. Beides kann zu einem vorzeitigen Bruch des Bohrers führen. Dies gilt selbstverständlich erst recht, wenn das Verhältnis der Länge des Spannutenabschnittes zum Nenndurchmesser des Bohrers mehr als 10 und insbesondere mehr als 20 beträgt

Aus diesem Grunde sind entsprechende Spiralbohrer, insbesondere wenn sie für tiefe Bohrungen vorgesehen sind (Bohrlochtiefe typischerweise mindestens das Acht- bis Zehnfache des Bohrlochdurchmessers), zumeist mit Rundfasen versehen, wie dies durch den oben zitierten Stand der Technik gemäß US 7,306,411 B2 und EP 0 891 239 belegt wird.

Die Rundfasen (die auch als "Führungsfasen" bezeichnet werden) sind üblicherweise schmale, von der Oberfläche des Schneidrückens etwas hervorstehende Streifen, die auf dem Schneidrücken angeordnet sind und der Führung des Bohrers im Bohrloch dienen, indem ihre Oberfläche auf einem Zylindermantel um die Achse des Bohrers liegt und so eine Führungsfläche bereitstellt.

Der Schneidrücken ist dabei nicht vollständig von den Rundfasen bedeckt, um die Reibung in dem jeweils hergestellten Bohrloch entsprechend gering zu halten.

Außerdem ist der (von der Bohrerachse aus gemessene) Radius der durch die Außenfläche der Rundfasen definierten Zylinderfläche geringfügig geringer als der Nennradius des Bohrers und damit etwas kleiner als der Radius des erzeugten Bohrlochs ist. Konkret weisen die meisten derartigen Bohrer hinter den radial äußeren Schneidecken der vorderen Schneidkanten, welche den Nenndurchmesser des Bohrers und damit den Durchmesser eines damit gebohrten Bohrloches definieren, eine kontinuierliche oder stufenartige Verjüngung auf, durch die sich der Außendurchmesser, gemessen über diametral gegenüberliegenden Rundfasen oder als doppelter Rundfasenradius, gegenüber dem Bohrlochdurchmesser um bis zu beispielsweise 0,3 mm verjüngt. Diese Verjüngung kann, von der Bohrerspitze aus gesehen, geradlinig oder konkav oder konvex gebogen verlaufen. Genau genommen ist also die durch die Außenflächen der Rundfasen definierte äußere Hüllfläche keine Zylinderoberfläche sondern Teil einer Konusfläche, allerdings mit einem extrem kleinen Konuswinkel von typischerweise weniger als 0,5°, zum Beispiel zwischen 0,1° und 0,2 °.

Allerdings soll der Spannutenabschnitt auch kein nennenswertes Spiel in dem Bohrloch haben, weil ansonsten zumindest bei Tieflochbohrern Schwingungen auftreten können, welche sich nachteilig auf die Bohrlochqualität und die Bruchfestigkeit des Bohrers auswirken können. Zur Vermeidung nachteiliger Schwingungen sollte das radiale Spiel des Spannutenabschnittes bzw. der Schneidrücken (einschließlich Rundfasen und der vorgesehenen Verjüngung) in dem Bohrloch weniger als 0,3 mm betragen.

Die Verjüngung kann auch ab einem gewissen Abstand von der Bohrerspitze, beispielsweise ab dem Zehnfachen des Nenndurchmessers, enden, so dass der Bohrer im weiteren Verlauf Richtung Schaft einen konstanten Durchmesser hat, der um bis zu 0,5 oder 0,6 mm kleiner ist als der Nenndurchmesser des Bohrers.

Bei den bekannten Spiralbohrern mit Rundfasen folgen diese Rundfasen im Allgemeinen dem Verlauf der Nebenschneidkante, d. h. sie erstrecken sich unter demselben Drallwinkel relativ zur Bohrerachse wie die Nebenschneidkanten und die Spannuten.

Aus der US 5,503,237 ist ein Spiralbohrer mit Rundfasen bekannt, welche sich nicht parallel zu der Nebenschneidkante, sondern senkrecht zu Bohrerachse erstrecken und effektiv als Teile gedachter umlaufender Stützringe angesehen werden können, die jeweils nur durch die Spannuten unterbrochen sind.

Die dem Drall der Schneidrücken und Spannuten folgenden Rundfasen können unmittelbar an die Nebenschneidkante anschließen, die von der Schnittlinie der Spannutfläche und der Schneidrückenfläche bzw. Rundfasenfläche gebildet wird. Rundfasen können aber auch einen Abstand zu dieser Nebenschneidkante aufweisen. Außerdem können entlang eines Schneidrückens bzw. an demselben Steg auch mehrere Rundfasen unter gewissen Umfangswinkelabständen relativ zueinander angeordnet sein. In manchen Fällen werden die Bohrer, genauer gesagt die Rundfasen, mit zusätzlichen Nebenschneidkanten ausgestattet, indem beispielsweise der Schneidrücken in Rotationsrichtung vor einer Rundfase noch eine als kleine Spannut wirkende Vertiefung erhält und der Übergang von der Vertiefung zu der Umfangsfläche der Rundfase als weitere Nebenschneidkante ausgebildet ist.

Der Bohrer hat dann effektiv mehrere in Umfangsrichtung zueinander versetzte Nebenschneidkanten, an die jeweils eine Rundfase anschließt. Dabei ist es auch schon bekannt, dass man pro Hauptschneidkante, d. h. auf jedem der durch Hauptspannuten getrennten Stege, beispielsweise drei Nebenschneidkanten entlang entsprechender Rundfasen haben kann.

Des weiteren sind auch Spiralbohrer bekannt, die neben einer ersten Rundfase, welche unmittelbar an die Nebenschneidkante anschließt, auch noch eine weitere Rundfase parallel zu der ersten Rundfase haben, wobei die dazwischen liegende Fläche des Schneidrückens auf einer Zylinderfläche liegt, deren Durchmesser nur geringfügig kleiner ist als der durch die Rundfasen definierte Durchmesser.

Der aus der EP 0 891 239 bekannte Spiralbohrer weist auf jedem Schneidrücken zwei Rundfasen, jedoch in unterschiedlichen Winkelabständen zueinander auf.

Eines der Probleme der herkömmlichen Bohrer besteht darin, einen entsprechenden Verschleiß der Bohrerspitze in einfacher Weise rechtzeitig zu erkennen. Ein anderes Problem liegt in der Reibung, welche durch die Rundfasen unvermeidlich im Bohrloch auftritt und welche gerade bei Verwendung mehrerer hintereinander angeordneter Rundfasen noch dadurch vergrößert werden kann, dass Schneidspäne sich in dem schmalen Spalt zwischen Schneidrücken und Bohrlochwand und zwischen zwei auf dem Schneidrücken vorgesehenen Rundfasen verklemmen. Außerdem wird die zweite, nachlaufende Rundfase bei entsprechenden Bohrern oftmals nur unzureichend mit dem Kühl- oder Schmiermittel versorgt, welches typischerweise an der Bohrerspitze zugeführt und überwiegend über die Spannuten abtransportiert wird.

Die aus der US 5,503,237 bekannten Spiralbohrer, bei welchen sich zahlreiche Rundfasen ausschließlich in Umfangsrichtung erstrecken, d.h. auf den Schneidrücken jeweils kurze Abschnitte eines umlaufenden Ringes bilden, haben den Nachteil, dass sie den Transport von Schmiermittel in axialer Richtung eher behindern, da sie keinerlei axiale Komponente aufweisen Gegenüber diesem Stand der Technik liegt der vorliegenden Erfindung die Aufgabe zugrunde, einen Spiralbohrer mit den eingangs genannten Merkmalen zu schaffen, der mindestens eines der vorgenannten Probleme beseitigt. Zum einen sollen die vorgesehenen Rundfasen eine bessere Schmierung erhalten. Weiterhin wäre es vorteilhaft, wenn die Gefahr einer Verklemmung von Spänen auf dem Schneidrücken zwischen benachbarten Rundfasen vermindert würde. Schließlich wäre es auch von Vorteil, wenn der Verschleiß an einem entsprechenden Bohrer leichter zu erkennen wäre.

Für einen Bohrer der eingangs genannten Art wird diese Aufgabe durch die Merkmale des Anspruchs 1 gelöst.

Dadurch dass die Rundfasen (von der Achse aus gemessen) einen größeren Neigungswinkel haben als die Spannuten, wobei der Drallwinkel der Spannuten selbstverständlich derselbe ist wie der Drallwinkel der Nebenschneidkanten bzw. des Schneidrückens, können die Rundfasen sich nicht über die gesamte axiale Länge des Schneidrückens erstrecken, sondern verlaufen diagonal über den Schneidrücken hinweg und enden jeweils an der Nebenschneidkante und an der rückwärtigen Kante des Schneidrückens am Übergang zu der nächst folgenden Spannut. Auch die Zwischenräume zwischen benachbarten Rundfasen, d.h. die Schneidrückenbereiche zwischen benachbarten Rundfasen, die hier auch Einstiche oder Kanäle genannt werden, enden dann jeweils an der Nebenschneidkante bzw. einer rückwärtigen Übergangskante des Schneidrückens zu der nachfolgenden Spannut, das heißt sie sind zu den beiden den Schneidrücken begrenzenden Spannuten hin offen.

Dies hat den Vorteil, dass jegliches Schmiermittel, welches sich in den Spannuten befindet, über diese Zwischenräume bzw. Einstiche leichter Zugang zu den Rundfasen findet und damit deren Reibungskoeffizienten verringert. Durch den (von 90 ° verschiedenen) Neigungswinkel der Rundfasen wird das Schmiermittel auch besser in axialer Richtung transportiert.

Außerdem können etwaige Späne, die in den Einstich zwischen zwei benachbarten Rundfasen gelangen, sehr schnell zur nächsten Spannut auf der offenen Seite des Zwischenraums zwischen den Rundfasen gelangen.

Der erfindungsgemäße Spiralbohrer, dessen Ausgestaltung insbesondere für Tieflochbohrer Vorteile hat, sorgt für eine verringerte Reibung des Spannutenabschnittes innerhalb des Bohrlochs, bei gleichzeitiger besserer Führung durch die Rundfasen, was auch einen ruhigeren Lauf des Bohrers zur Folge hat. Dadurch kann auch die Bohrlochqualität nochmals verbessert werden.

Ein weiterer Vorteil des erfindungsgemäßen Bohrers liegt in einer schnelleren und einfacheren Verschleißerkennung, da mit einem Verschleiß der Bohrerspitze sich die stirnseitige Freifläche durch Abnutzung axial zurückverlagert, und sich dadurch die Lage einer Rundfase am Übergang zwischen Schneidrücken und stirnseitiger Freifläche relativ zu der jeweiligen Hauptschneidkante in Umfangsrichtung verschiebt.

Zweckmäßigerweise wird der sogenannte "Einstichs" nach dem Fertigstellen der äußeren Kontur des Bohrers einschließlich der Außenflächen der Rundfasen, durch Einschleifen dieses Einstich in den zunächst noch nicht unterbrochenen Schneidrücken hergestellt. Der Einstich hat demnach die Form einer Nut, welche die beiden Rundfasen voneinander trennt, Diese Nut kann einen weitgehend beliebigen, z. B. rechteckigen, dreieckigen, trapezförmigen oder runden Querschnitt haben und hat zum Beispiel eine Tiefe (gemessen von der durch die Rundfasen definierten Hüllfläche) von 0,01 bis 0,5 mm. Vorzugsweise beträgt die Tiefe zwischen 0,05 und 0,2 mm.

Gemäß der Erfindung ist vorgesehen, dass der Neigungswinkel um mindestens 5° größer als der Drallwinkel, gleichzeitig aber auch kleiner als 80° ist. Der Unterschied zwischen Neigungswinkel und Drallwinkel von mindestens 5° stellt sicher, dass der schmale Einstich auf dem Schneidrücken zwischen zwei benachbarten Rundfasen innerhalb der Länge des Spannutenabschnittes tatsächlich die gesamte Breite des Schneidrückens überstreicht, das heißt zu den beiden benachbarten Spannuten hin offen ist, so dass die vorstehend beschriebenen Wirkungen auch eintreten können.

Der Unterschied zwischen Drallwinkel und Neigungswinkel beträgt vorzugsweise mehr als 10° und kann insbesondere im Bereich von 20 bis 40° liegen, wobei der Drallwinkel typischerweise in der Größenordnung von 30° (±10°) liegt.

In einer Variante kann vorgesehen sein, dass die Schneidrücken zumindest in einem Spitzenabschnitt des Bohrers, einschließlich der darauf vorgesehenen Rundfasen (in Umfangsrichtung) einen Freiwinkel von mindestens 1 ° aufweisen. Dies vermeidet, dass unmittelbar an der Bohrerspitze, wo ohnehin die Drehmomentbelastung auf den Bohrer durch den Eingriff der Hauptschneiden mit dem Werkstück am größten ist, zusätzlich auch noch eine erhöhte Reibung im Bereich der Rundfasen in der Nähe der Spitze auftritt. Ansonsten ist eine axiale Freistellung effektiv auch schon durch die hinter den Schneidecken beginnende Verjüngung des Spannutenabschnittes gegeben.

Bis zu dem Abstand A von der Bohrerspitze und möglicherweise abgesehen von einem kurzen Abschnitt an der Spitze beträgt der Freiwinkel auf den Rundfasen in Umfangsrichtung 0 Grad). Dabei beträgt der Abstand A mindestens das Dreifache des Bohrerdurchmessers und er entspricht maximal der Länge (L) des Spannutenabschnittes, kann aber auch, insbesondere bei Langlochbohrern, deren Länge-zu-Durchmesser-Verhältnis (bezogen auf den Spannutenabschnitt) jenseits von 10 oder 15 liegt, auch auf einen Wert beschränkt sein, der z. B. zwischen 1/3 und 2/3 der Länge L des Spannutenabschnittes liegt.

In dem darüberliegenden Bereich, das heißt in einem Abstand zur Bohrerspitze, der größer als der Abstand A und kleiner als die Länge L des Spannutenabschnittes ist, kann man gegebenenfalls auf die Rundfasen verzichten.

Die Breite der Rundfasen, senkrecht zu ihrer Längserstreckung gemessen, sollte zwischen 0,2 und 2 mm betragen, vorzugsweise im Bereich von 0,5 bis 1,0 mm liegen.

Die Breite der Führungsfasen ist generell ein Kompromiss zwischen einerseits der in Kauf zu nehmenden Reibung und andererseits der Wirkung als an der Bohrlochwand gleitende Führungsfläche.

Der lichte Abstand, d. h. die Breite der Einstiche, zwischen benachbarten Rundfasen sollte dabei ebenfalls mindestens 0,2 und maximal 5 mm betragen, vorzugsweise liegt dieser lichte Abstand zwischen 0,5 und 2 mm.

Gemäß der Erfindung ist vorgesehen, dass der Bohrer, ausgehend von den Schneidecken am radial äußeren Ende der Hauptscheidkanten, sich in Richtung Schaft leicht verjüngt, wobei bevorzugt die Verjüngung zwischen 0,1 und 0,8 mm pro 100 mm Länge des sich verjüngenden Abschnittes beträgt.

Gemäß einer Ausführungsform besteht der erfindungsgemäße Spiralbohrer aus Vollhartmetall.

Weitere Vorteile, Merkmale und Anwendungsmöglichkeiten der vorliegenden Erfindung werden deutlich anhand der folgenden Beschreibung einer bevorzugten-Ausführungsform und der dazugehörigen Figuren. Es zeigen:
Figur 1 eine Seitenansicht auf einen erfindungsgemäßen Spiralbohrers,
Figur 2 eine Seitenansicht auf den Spitzenabschnitt des Spiralbohrers nach Figur 1,
Figur 3 eine stirnseitige Draufsicht auf die Spitze des Spiralbohrers nach Figur 1, und
Figur 4 schematisch die Kontur eines erfindungsgemäßen Spiralbohrers

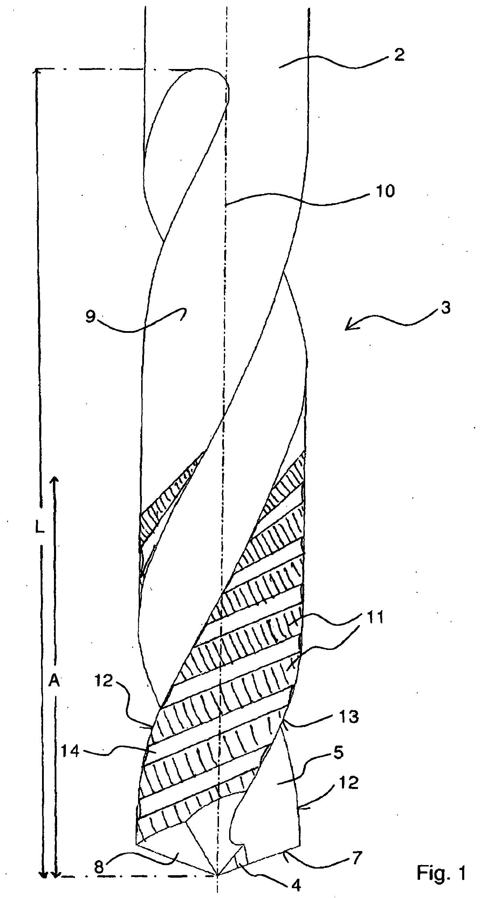

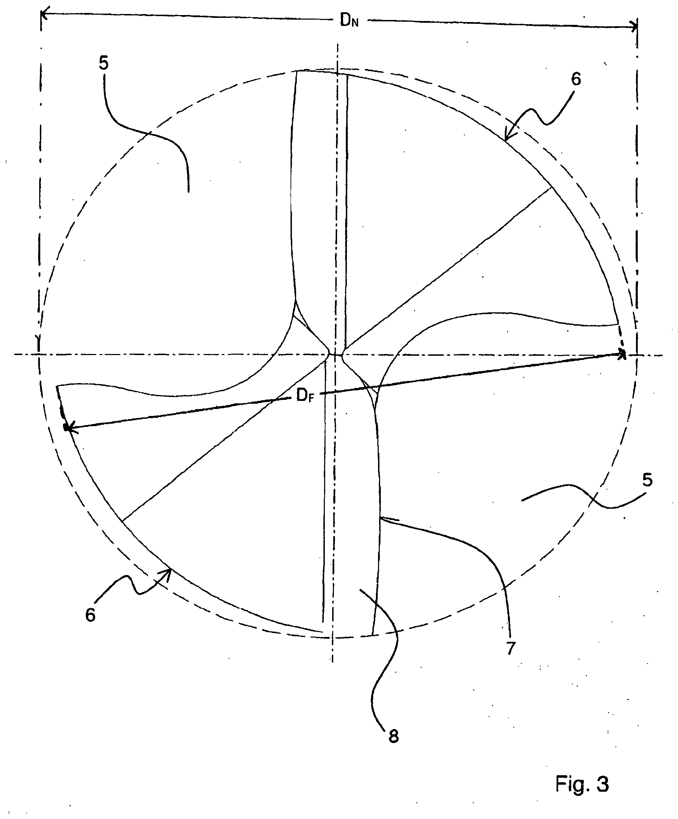

Man erkennt in den Figuren 1 bis 4 zunächst einen insgesamt mit 1 bezeichneten Spiralbohrer, der aus einem Schaftabschnitt 2 und einem Spannutenabschnitt 3 besteht, welcher sich zwischen einer in der Seitenansicht keil- bzw. kegelförmig ausgebildeten Spitze 4 und dem Schaftabschnitt 2 erstreckt. Wie man aus der stirnseitigen Draufsicht gemäß Figur 3 erkennt, weist der Spiralbohrer 1 zwei Spannuten 5 auf, die durch zwei Stege 6 voneinander getrennt sind. An der Spitze 4 des Bohrers enden die Stege 6 in Freiflächen 8, welche entlang einer Schnittlinie mit den Innenflächen der Spannuten 5 die Hauptschneidkanten 7 definieren.

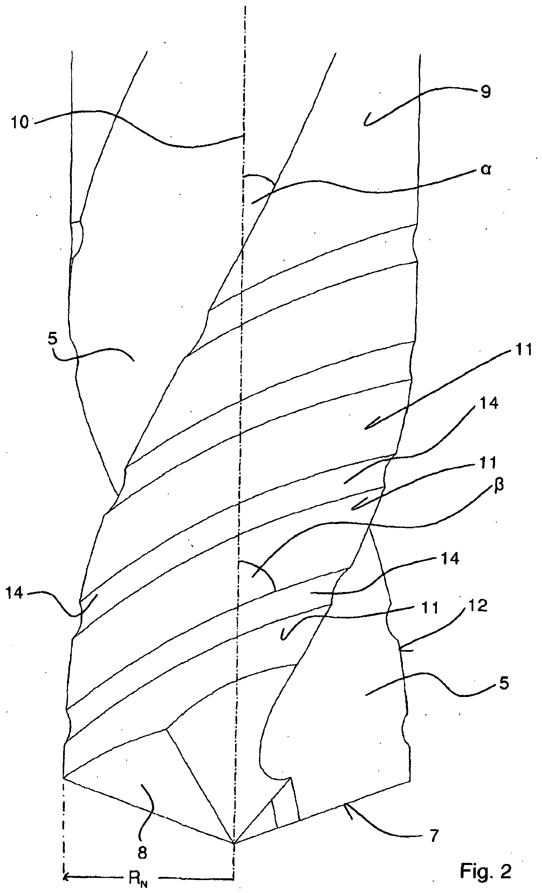

Die Besonderheiten des erfindungsgemäßen Bohrers ergeben sich vornehmlich aus Figur 2. Figur 2 zeigt in einer vergrößerten Seitenansicht eines vorderen Spitzenabschnittes des Spiralbohrers 1 bzw. des Spannutenabschnittes 3 einen der Stege 6 mit einem Schneidrücken 9, der sich zwischen den beiden Spannuten 5 erstreckt. Auf dem Schneidrücken 9 verlaufen mehrere parallele Rundfasen 11 unter einem Neigungswinkel β relativ zur Bohrerachse 10, der in diesem Ausführungsbeispiel um ca. 30° größer ist als der Drallwinkel α, welcher die Neigung der Spannuten bzw. der Nebenschneidkanten 12 relativ zur Achse 10 des Bohrers definiert. Die Rundfasen 11 haben eine Breite (gemessen senkrecht zu ihrer Längserstreckung (bzw. unter einem Winkel β -90° relativ zur Achse 10)), die zwischen 0,2 und 5 mm und vorzugsweise zwischen 0,5 und 1,5 mm liegt, wobei auch der Abstand zwischen den Rundfasen 11, d. h. die Breite der Einstiche 14, im Bereich von 0,2 bis 5 mm und vorzugsweise zwischen 0,5 und 1,5 mm liegt.

Die Rundfasen 11 erstrecken sich über die Schneidrücken 9 mindestens innerhalb eines Abstandes A von der Bohrerspitze 4, wobei der Abstand A mindestens das Dreifache des Nenndurchmessers D des Bohrers beträgt. In einem Spitzenabschnitt, der maximal das Zweifache des Nenndurchmessers des Bohrers beträgt, könnte der Schneidrücken einschließlich der Rundfasen mit einem Freiwinkel versehen sein. Die unterschiedlichen Durchmesser D_{N} und D_{F} ( mit D_{N} > D_{F}) in Figur 3 ergeben sich jedoch nicht notwendigerweise aus einem Freiwinkel in Umfangsrichtung, sondern entstehen unvermeidlich auch schon dadurch, dass der als D_{F} bezeichnete Durchmesser in einer axial näher zum Schaft liegenden Ebene gemessen wird als der Durchmesser D_{N}, wobei sich die Außenkontur des Bohrers insgesamt zum Schaft hin verjüngt und die Rundfasen relativ zu Achse geneigt verlaufen und der Bohrerdurchmesser nur dort zu bestimmen ist, wo sich diametral gegenüberliegend Rundfasen befinden.

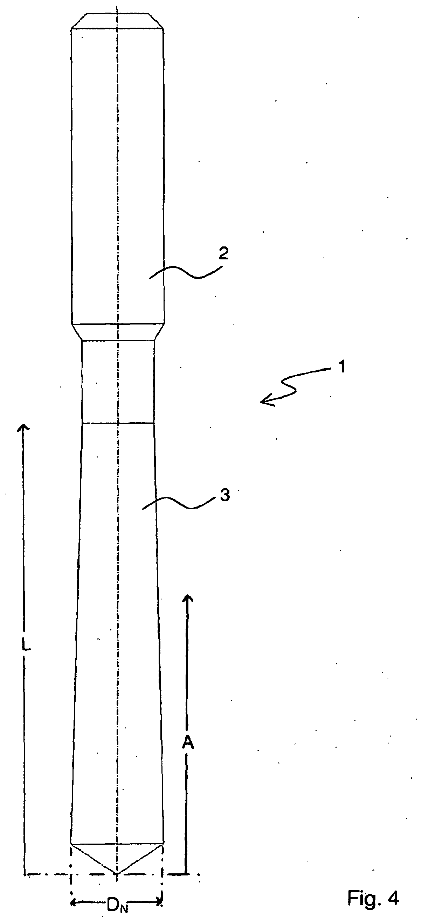

In Figur 4 ist die gesamte Kontur des Bohrers nochmals schematisch wiedergegeben. Der Bohrer 1 besteht aus dem (hier abgestuften) Schaft 2 und dem Spannutenabschnitt 3. Der Spannutenabschnitt 3 verjüngt sich, ausgehend von dem maximalen Durchmesser DF an den Schneidecken bzw radial äußeren Enden der Hauptschneidkanten 7, in Richtung Schaft auf einen etwas kleineren Durchmesser (jeweils gemessen über die Rundfasen hinweg). Die Verjüngung liegt in einem Bereich von z. B. 0,1 bis 0,8 mm pro 100 mm Länge des Spannutenabschnittes 3, wobei der Spannutenabschnitt 3 ab einer gewissen Länge des verjüngten Bereiches auch wieder in einem konstanten Durchmesser übergehen kann.

Die Überlegungen zum Durchmesser würden analog selbstverständlich auch für Bohrer mit einer ungeraden Anzahl von Schneiden gelten, bei welchem man den Durchmesser als den doppelten Radius von der Achse zur Außenfläche einer Rundfase definieren würde, da die Schneidrücken 9 und die Rundfasen 11 dann im Allgemeinen nicht mehr einander diametral gegenüber liegen.

In dem Bereich oberhalb des Abschnittes A bleibt der Bohrerdurchmesser konstant das heißt die Außenflächen der Rundfasen 11 liegen auf einer Zylinderoberfläche um die Achse 10 des Bohrers 10 mit einem Radius, welcher etwas (zum Beispiel zwischen 0,1 und 0,3 mm) geringer ist als der Nennradius des Bohrers.

Die seitlichen Begrenzungen der Rundfasen 11 bilden keine Schneidkanten. Zwischen der Nebenschneidkante 12 und der rückwärtigen Kante 13 des Scheidrückens 9 erstrecken sich jeweils durch die Einstiche gebildete Kanäle 14, die unter dem selben Neigungswinkel β zur Achse 10 verlaufen wie die Rundfasen 11 und die eine verbesserte Schmiermittelversorgung der Oberflächen der Rundfasen 11 bewirken. Etwaige Bohrspäne, die in den Kanal 14 gelangen, können aufgrund der Drehung des Bohrers und dessen Neigungswinkels der Rundfasen 11 relativ leicht und schnell über die rückwärtige Kante 13 des Schneidrückens aus dem Kanal 14 in die nächstfolgende Spannut 5 überführt werden.

Die Neigung der Rundfasen relativ zur Achse ermöglicht einen gleichmäßigen Lauf des Bohrers in dem Bohrloch und verteilt die Führungswirkung einer Rundfase auf einem kürzeren axialen Abschnitt über einen größeren Umfangsbereich als im Falle von Rundfasen, welche der Neigung der Spannuten bzw. der Nebenschneidkanten 12 folgen.

Gleichzeitig überlappen aber auch benachbarte Rundfasen in axialer Richtung, so dass ihr Schneidrücken an jeder axialen Position über mindestens zwei beabstandete Rundfasen an der Bohrlochwand abgestützt wird.

Im oberen Teil des Spannutenabschnittes 3, der zwischen dem Abstand A zur Bohrerspitze und dem Schaft 2 liegt, können die Rundfasen gegebenenfalls vollständig entfallen wobei der Schneidrücken einen Außenradius definiert, der beispielsweise 0,1 bis 0,3 mm unterhalb des Nennradius des Bohrers liegt.

Einen Verschleiß der Bohrerspitze erkennt man insbesondere daran, dass die Position einer Rundfase entlang der Kante, die zwischen dem Schneidrücken 9 und der Freifläche 8 gebildet wird, mit zunehmendem Verschleiß der Freifläche 8 in Umfangsrichtung wandert. Der erfindungsgemäße Spiralbohrer, dessen Ausgestaltung insbesondere für Tieflochbohrer Vorteile hat, sorgt für eine verringerte Reibung des Spannutenabschnittes innerhalb des Bohrlochs, bei gleichzeitiger besserer Führung und einem ruhigerem Lauf des Bohrers. Dadurch kann auch die Bohrlochqualität nochmals verbessert werden.

Zu den Zeichnungen sei noch angemerkt, dass diese zwar einerseits realistische Maßverhältnisse wiedergeben, dennoch aber im Wesentlichen als schematische Zeichnungen zu verstehen sind, vor allem hinsichtlich des in der Realität zumeist deutlich größeren Verhältnisses von Länge zu Durchmesser des Bohrers insgesamt, aber auch des Spannutenabschnittes 3 und des Abschnittes A. Auch die konische Verjüngung des Spannutenabschnittes gemäß Figur 4 ist deutlich übertrieben dargestellt.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

## Patentansprüche

1. Spiralbohrer mit einem Schaft (2) und einem Spannutenabschnitt (3), der sich zwischen einer Bohrerspitze (4) und dem Schaft (2) erstreckt und der mindestens zwei unter einem Drallwinkel (α) schraubenförmig umlaufende Spannuten (5) aufweist, die durch zwei Stege (6) voneinander getrennt sind, welche einen sich am Umfang des Spannutenabschnittes (3) zwischen den Spannuten (5) erstreckenden Schneidrücken (9) aufweisen, wobei auf jedem Schneidrücken (9) jeweils mindestens zwei voneinander beabstandete Rundfasen (11) vorgesehen sind, die sich auf dem Schneidrücken (9) unter einem Neigungswinkel (β) relativ zur Bohrerachse (10) erstrecken, der größer als der Drallwinkel (α) ist, wobei der Drallwinkel (α) und der Neigungswinkel (β) von der Bohrerachse aus in derselben Richtung gemessen werden, **dadurch gekennzeichnet, dass** der durch die Rundfasen definierte Durchmesser des Spannutenabschnittes, ausgehend von der Bohrerspitze, sich innerhalb eines Abstand (A) von der Bohrerspitze zum Schaft hin kontinuierlich verjüngt und der Abstand (A) mindestens das Dreifache des Bohrerdurchmessers beträgt und maximal der Länge (L) des Spannutenabschnittes entspricht und wobei der Neigungswinkel um mindestens 5° größer als der Drallwinkel und kleiner als 80° ist.

2. Spiralbohrer nach Anspruch 1, **dadurch gekennzeichnet, dass** innerhalb eines kurzen Abschnittes hinter der Bohrerspitze die Schneidrücken einschließlich der Rundfasen einen Freiwinkel > 1° aufweisen.

3. Spiralbohrer nach einem der vorstehenden Ansprüche, **dadurch gekennzeichnet, dass** die Verjüngung zwischen 0,1 und 0,8 mm pro 100 mm Länge des sich verjüngenden Abschnittes beträgt.

4. Spiralbohrer nach einem der vorstehenden Ansprüche, **dadurch gekennzeichnet, dass** der Abstand (A) kleiner ist als die Länge (L) und dass der Durchmesser des Spannutenabschnittes einschließlich etwaiger Rundfasen im Bereich zwischen dem Abstand (A) und der Länge (L) konstant ist und dem Durchmesser des verjüngten Abschnittes im Abstand (A) von der Bohrerspitze entspricht.

5. Spiralbohrer nach einem der vorstehenden Ansprüche, **dadurch gekennzeichnet, dass** die senkrecht ihrer Längserstreckung gemessene Breite der Rundfasen zwischen 0,2 und 5 mm beträgt, vorzugsweise zwischen 0,5 und 1,5 mm liegt.

6. Spiralbohrer nach einem der vorstehenden Ansprüche, **dadurch gekennzeichnet, dass** der lichte Abstand zwischen benachbarten Rundfasen mindestens 0,2 und maximal 5 mm beträgt, vorzugsweise zwischen 0,5 und 1,5 mm liegt.

7. Spiralbohrer nach einem der vorstehenden Ansprüche, **dadurch gekennzeichnet, dass** die Tiefe des Einstichs zwischen benachbarten Rundfasen zwischen 0,01 und 0,5 mm, vorzugsweise zwischen 0,05 und 0,2 mm beträgt

8. Spiralbohrer nach einem der vorstehenden Ansprüche, **dadurch gekennzeichnet, dass** er aus Vollhartmetall besteht.

## Claims

1. A twist drill comprising a shank (2) and a flute portion (3) which extends between a drill tip (4) and the shank (2) and has at least two flutes (5) which peripherally extend helically at a twist angle (α) and which are separated from each other by two webs (6) and have a land (9) extending at the periphery of the flute portion (3) between the flutes (5), wherein provided on each land (9) are at least two respective mutually spaced support ridges (11) which extend on the land (9) at an angle of inclination (β) relative to the drill axis (10), that is larger than the twist angle (α), wherein the twist angle (α) and the angle of inclination (β) are measured in the same direction from the drill axis, **characterised in that** the diameter of the flute portion, as defined by the support ridges and starting from the drill tip, continuously narrows within a spacing (A) from the drill tip towards the shank, and the spacing (A) is at least three times the drill diameter and at a maximum corresponds to the length (L) of the flute portion, and wherein the angle of inclination is at least 5° larger than the twist angle and less than 80°.

2. A twist drill as set forth in claim 1 **characterised in that** within a short portion behind the drill tip the lands including the support ridges have a relief angle > 1°.

3. A twist drill as set forth in one of the preceding claims **characterised in that** the narrowing is between 0.1 and 0.8 mm per 100 mm of length of the narrowing portion.

4. A twist drill as set forth in one of the preceding claims **characterised in that** the spacing (A) is less than the length (L) and the diameter of the flute portion including any support ridges is constant in the region between the spacing (A) and the length (L) and corresponds to the diameter of the narrowed portion at the spacing (A) from the drill tip.

5. A twist drill as set forth in one of the preceding claims **characterised in that** the width of the support ridges, measured perpendicularly to the longitudinal extent thereof, is between 0.2 and 5 mm, preferably between 0.5 and 1.5 mm.

6. A twist drill as set forth in one of the preceding claims **characterised in that** the internal spacing between adjacent support ridges is at least 0.2 and at a maximum 5 mm, preferably between 0.5 and 1.5 mm.

7. A twist drill as set forth in one of the preceding claims **characterised in that** the depth of the recess between adjacent support ridges is between 0.01 and 0.5 mm, preferably between 0.05 and 0.2 mm.

8. A twist drill as set forth in one of the preceding claims **characterised in that** it comprises solid carbide metal.

## Revendications

1. Foret hélicoïdal avec une tige (2) et un tronçon de rainures à copeaux (3) qui s'étend entre une pointe de foret (4) et la tige (2) et qui présente au moins deux rainures à copeaux (5), s'enroulant à la façon d'une vis en formant un angle d'hélice (α), qui sont séparées l'une de l'autre par deux nervures (6) et qui présentent des crêtes de taillant (9) s'étendant sur la périphérie du tronçon de rainures à copeaux (3) entre les rainures à copeaux (5), dans lequel il est prévu, sur chaque crête de taillant (9), respectivement au moins deux chanfreins ronds (11) espacés l'un de l'autre qui s'étendent sur la crête de taillant (9) en formant, par rapport à l'axe de foret (10), un angle d'inclinaison (β) qui est plus grand que l'angle d'hélice (α), l'angle d'hélice (α) et l'angle d'inclinaison (β) étant mesurés à partir de l'axe de foret dans la même direction, **caractérisé en ce que** le diamètre du tronçon de rainures à copeaux défini par les chanfreins ronds se rétrécit de façon continue, à partir de la pointe de foret, en direction de la tige, à l'intérieur d'une distance (A) de la pointe de foret à la tige, et la distance (A) représente au moins le triple du diamètre de foret et correspond au maximum à la longueur (L) du tronçon de rainures à copeaux, et dans lequel l'angle d'inclinaison est supérieur d'au moins 5° à l'angle d'hélice et est inférieur à 80°.

2. Foret hélicoïdal selon la revendication 1, **caractérisé en ce que**, à l'intérieur d'un court tronçon derrière la pointe de foret, les crêtes de taillant, y compris le chanfrein rond, présentent un angle de dépouille > 1°.

3. Foret hélicoïdal selon l'une des revendications précédentes, **caractérisé en ce que** le rétrécissement est compris entre 0,1 et 0,8 mm pour 100 mm de longueur du tronçon qui va en rétrécissant.

4. Foret hélicoïdal selon l'une des revendications précédentes, **caractérisé en ce que** la distance (A) est inférieure à la longueur (L), et **en ce que** le diamètre du tronçon de rainures à copeaux, y compris les éventuels chanfreins ronds, est constant dans la plage entre la distance (A) et la longueur (L) et correspond au diamètre du tronçon rétréci à la distance (A) de la pointe de foret.

5. Foret hélicoïdal selon l'une des revendications précédentes, **caractérisé en ce que** la largeur des chanfreins ronds mesurée perpendiculairement à leur étendue longitudinale est comprise entre 0,2 et 5 mm, de préférence entre 0,5 et 1,5 mm.

6. Foret hélicoïdal selon l'une des revendications précédentes, **caractérisé en ce que** la distance libre entre des chanfreins ronds voisins est au moins égale à 0,2 et au maximum égale à 5 mm, elle est de préférence comprise entre 0,5 et 1,5 mm.

7. Foret hélicoïdal selon l'une des revendications précédentes, **caractérisé en ce que** la profondeur de l'encoche entre des chanfreins ronds voisins est comprise entre 0,01 et 0,5 mm, de préférence entre 0,05 et 0,2 mm.

8. Foret hélicoïdal selon l'une des revendications précédentes, **caractérisé en ce qu'**il est composé de carbure monobloc.
